# EUROPÄISCHE PATENTSCHRIFT

(11) **EP 3 145 791 B1**
(45) Veröffentlichungstag und Bekanntmachung des Hinweises auf die Patenterteilung: **05.06.2019**
(21) Anmeldenummer: 15718204.9
(22) Anmeldetag: 21.04.2015
(51) Int. Cl.: B62D 1/20, B62D 5/083

(54) **MITTELSTELLUNGSKAPPE ZUR MONTAGEHILFE DES EINGANGSWELLE-DREHSTABVERBUNDS EINER KRAFTFAHRZEUGLENKUNG**
CENTRAL POSITION CAP FOR ASSISTING THE INSTALLATION OF THE INPUT SHAFT/TORSION BAR ASSEMBLY OF A MOTOR VEHICLE STEERING SYSTEM
CAPOT DE CENTRAGE FACILITANT LE MONTAGE DE L'ENSEMBLE ARBRE D'ENTRÉE-BARRE DE TORSION DE LA DIRECTION D'UN VÉHICULE AUTOMOBILE

(30) Priorität: 23.05.2014 DE 102014007503
(43) Veröffentlichungstag der Anmeldung: 29.03.2017
(73) Patentinhaber: ThyssenKrupp Presta AG, 9492 Eschen (LI); thyssenkrupp AG, 45143 Essen (DE)
(72) Erfinder: KENÉZ, Pèter, H-1089 Budapest (HU); MIHÀLSZKI, Jozsef, H-3711 Szirmabesenyö (HU)
(74) Vertreter: thyssenkrupp Intellectual Property GmbH
(86) Internationale Anmeldenummer: PCT/EP2015/058568
(87) Internationale Veröffentlichungsnummer: WO 2015/176894

(56) Entgegenhaltungen:
- EP-A2- 2 562 438
- DE-A1- 4 129 042
- US-A1- 2014 020 487

## Beschreibung

Die vorliegende Erfindung betrifft eine Kraftfahrzeuglenkung mit einem Eingangswellen-Drehstabverbund und eine Mittelstellungskappe mit den Merkmalen des Oberbegriffs des Anspruchs 1.

Bei gattungsgemäßen Zahnstangenlenkgetrieben überträgt eine Lenkwelle das von einem Fahrer auf ein Lenkrad ausgeübte Lenkdrehmoment auf eine Eingangswelle eines Lenkgetriebes. Die Eingangswelle des Lenkgetriebes ist mit einem Ritzel über einen Drehstab verbunden, wobei das Ritzel mit einer Zahnstange kämmt, die in dem Gehäuse des Lenkgetriebes in Längsrichtung verschiebbar gelagert ist. Eine Drehung der Eingangswelle und des Ritzels wird dadurch in eine Schiebebewegung der Zahnstange umgesetzt. Die Zahnstange selbst ist über Spurstangen mit den gelenkten Fahrzeugrädern des Kraftfahrzeugs verbunden. Die Drehung des Lenkrades wird so in eine Lenkbewegung der gelenkten Räder umgesetzt.

Der Drehstab verbindet die Eingangswelle und das Lenkritzel in axialer Richtung, so dass sie zueinander eine definierte Position haben. Weiterhin bewirkt er in Abhängigkeit vom Lenkradhandmoment eine relative Verdrehung zwischen der Eingangswelle und dem Lenkritzel in einem Lenkventil, die zur Steuerung einer hydraulischen Lenkunterstützung genutzt wird.

Der Drehstab wird an einem Ende in einer Bohrung des Lenkritzels eingepresst. Am anderen Ende wird er mit der Eingangswelle verbunden. Dazu werden herkömmlicherweise beide quer durchbohrt und verstiftet. Dabei wird die Eingangswelle in eine Position gebracht, von der aus die Lenkventilkennung für beide Drehrichtungen symmetrisch ist, die so genannte hydraulische Mitte. In dieser Position wird die Eingangswelle mit dem unbelasteten und spannungsfreien Drehstab verbunden. Durch diesen Vorgang, das so genannte Balancieren des Ventils, wird sichergestellt, dass ohne ein aufgebrachtes Lenkradmoment, weder Druck in die eine noch in die andere Zylinderkammer eingesteuert wird und dass der Druckaufbau unter Lenkradmomenteneinfluss in beiden Drehrichtungen symmetrisch erfolgt.

In einer weiteren Ausführungsform wird der Drehstab an einem Ende in einer Bohrung des Lenkritzels eingepresst. Am anderen Ende wird er mit der Eingangswelle verbunden. Dazu werden beide Bauteile drehfest miteinander verbunden. Dies kann sowohl kraftschlüssig als auch formschlüssig erfolgen. Beide Verfahren können auch in Kombination zum Einsatz kommen. Dabei wird die Eingangswelle in eine Position gebracht, von der aus die Lenkventilkennung für beide Drehrichtungen symmetrisch ist, die so genannte hydraulische Mitte. In dieser Position wird die Eingangswelle mit dem unbelasteten und spannungsfreien Drehstab verbunden. Durch diesen Vorgang, das so genannte Balancieren des Ventils, wird sichergestellt, dass ohne ein aufgebrachtes Lenkradmoment, weder Druck in die eine noch in die andere Zylinderkammer eingesteuert wird und dass der Druckaufbau unter Lenkradmomenteneinfluss in beiden Drehrichtungen symmetrisch erfolgt.

Zur Aufnahme des Drehstabs ist die Eingangswelle hohl gebohrt. Der Drehstab durchsetzt die Eingangswelle und wird von ihr überragt. Dieses überragende Ende der Eingangswelle wird von einer Mittelstellungskappe umfangsseitig umgeben. Die Mittelstellungskappe dient zum Einen als Schutzkappe für die darunter liegenden Bauteile und zum andern als Positionierungshilfe für das Zusammenfügen der Eingangswelle mit der Lenksäule.

Nach außen ist der Hohlraum der Eingangswelle durch einen O-Ring zwischen Eingangswelle und Drehstab abgedichtet. Damit der O-Ring richtig positioniert werden kann, besitzt der Drehstab eine Nut zur Aufnahme des O-Rings. Dazu muss der Drehstab an seinem einen Ende länger ausgeführt werden als es seitens des Pressverbandes mit der Eingangswelle notwendig ist. Das Einbringen der O-Ring Nut ist zudem recht teuer und bildet zugleich eine Schwachstelle (Sollbruchstelle) im Bauteil. Weiterhin wird das Balancieren durch die Reibung des O-Rings an der Innenseite der Eingangswelle erschwert.

Aus der Offenlegungsschrift DE 10 2011 017 150 A1 ist eine Kraftfahrzeuglenkung bekannt, bei der die Abdichtung der Verbindung von Drehstab und Welle durch eine Presspassung erzielt wird. Eine Abdichtung der Eingangswelle aus Richtung der Lenksäule ist nicht gegeben.

Die DE 41 29 042 A1 offenbart eine Schutzkappe, die nur bei richtiger Positionierung der Eingangswelle relativ zur Lenksäule die Bohrung der Sicherungsschraube freigibt und somit eine Positionierungshilfe darstellt. Eine Abdichtung des Eingangswellen-Drehstabverbunds ist nicht gegeben. DE 41 29 042 offenbart den Oberbegriff des Anspruchs 1.

Es ist Aufgabe der vorliegenden Erfindung, eine Kraftfahrzeuglenkung mit einem Eingangswellen-Drehstabverbund mit Mittelstellungskappe und eine Mittelstellungskappe anzugeben, die besonders kostengünstig herzustellen sind, ohne dass sich die Dauerhaltbarkeit des Verbundes verringert.

Diese Aufgabe wird von einer Kraftfahrzeuglenkung mit einem Eingangswellen-Drehstabverbund mit den Merkmalen des Anspruchs 1 und einer Mittelstellungskappe mit den Merkmalen des Anspruchs 10 gelöst.

Danach ist eine Kraftfahrzeuglenkung mit einem Eingangswellen-Drehstabverbund, aufweisend einen in einer axialen Hohlbohrung einer Eingangswelle angeordneten Drehstab, wobei der Drehstab in einem ersten Endbereich mit der Eingangswelle drehfest verbunden ist, und eine die Eingangswelle zumindest teilweise umgebenden Mittelstellungskappe, die einen in Axialrichtung erstreckenden Fortsatz aufweist, der zur Ausrichtung der Eingangswelle relativ zu einer Lenksäule angeordnet ist, vorgesehen, bei der die Mittelstellungskappe in die Hohlbohrung der Eingangswelle an einem lenksäulennahen Ende eingreift. Durch diese Ausgestaltung der Mittelstellungskappe kann auf die herkömmlich vorgesehene Abdichtung zwischen dem Drehstab und der Eingangswelle verzichtet werden. Dies hat den Vorteil, dass der Drehstab ohne Nut gefertigt werden kann, wodurch Kosten eingespart werden und das Bauteil langlebiger wird. Weiterhin ist das Balancieren deutlich einfacher, da auf den O-Ring zwischen Drehstab und Eingangswelle verzichtet wird.

Vorzugsweise ist zwischen der Mittelstellungskappe und einer Innenwandung der Hohlbohrung der Eingangswelle ein Dichtbereich vorgesehen. Dieser Dichtbereich dient als zusätzliche Abdichtung der Eingangswelle aus Richtung der Lenksäule.

Bevorzugt weist der Dichtbereich wenigstens eine Dichtlippe auf.

In einer vorteilhaften Ausgestaltung wird die Mittelstellungskappe einstückig in einem Spritzgussverfahren hergestellt. Dabei kann bevorzugt vorgesehen sein, dass die Mittelstellungskappe mit dem Dichtbereich im Zweikomponenten-Spritzgussverfahren hergestellt wird.

Vorteilhafterweise weist die Mittelstellungskappe einen topfförmigen Fortsatz zur Aufnahme in die Hohlbohrung der Eingangswelle auf.

In einer Ausführungsform weist der topfförmige Fortsatz eine umlaufende Außennut zur Aufnahme eines O-Rings auf. Dieser O-Ring dient als Abdichtung bzw. Dichtbereich zwischen der Mittelstellungskappe und der Innenwandung der Hohlbohrung der Eingangswelle.

Zudem ist es vorteilhaft, wenn die Eingangswelle den Drehstab über den ersten Endbereich überragt.

Bevorzugt ist der Drehstab in dem ersten Endbereich mit der Eingangswelle drehfest verstiftet.

Weiterhin ist es vorteilhaft, wenn die Mittelstellungskappe am lenksäulenfernen Ende in eine Schutzkappe ausläuft, die eine darunterliegende Gehäuseöffnung eines die Eingangswelle umgebenden Gehäuses abdeckt.

Es ist zudem eine Mittelstellungskappe für eine Kraftfahrzeuglenkung mit wenigstens einem der vorhergehenden Merkmale vorgesehen.

Eine bevorzugte Ausführungsform der Erfindung wird nachfolgend anhand der Zeichnung näher erläutert. Es zeigt:

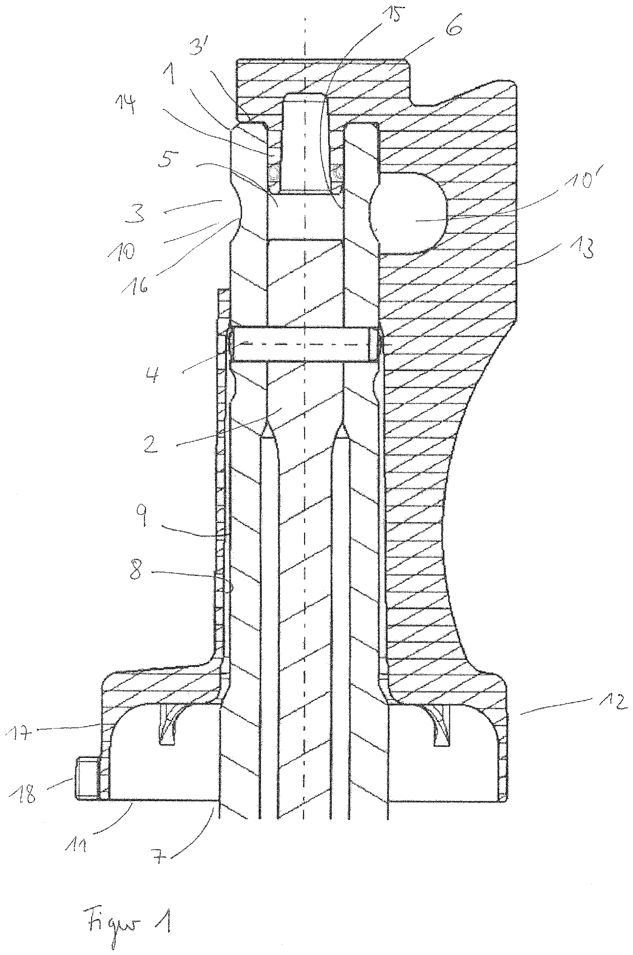

- Fig. 1:: einen Längsschnitt eines Eingangswellen-Drehstabverbundes mit einer Mittelstellungskappe.

In der Figur 1 ist die Eingangswelle 1 eines nicht näher dargestellten Lenkgetriebes eines Kraftfahrzeugs dargestellt. Zur Aufnahme eines Drehstabs 2 ist die Eingangswelle 1 in Axialrichtung hohl gebohrt. Der Drehstab 2 durchsetzt die Eingangswelle 1 bis auf einen ersten Endbereich 3, und ist mit ihr über einen Querstift 4 drehfest verbunden. Die Hohlbohrung 5 im ersten Endbereich 3 ist zur Aufnahme einer Mittelstellungskappe 6 vorgesehen. Die Mittelstellungskappe 6 übernimmt unter anderem die Ausrichtung der Eingangswelle 1 relativ zur nicht dargestellten Lenksäule. In der Zeichnung ist weiterhin nicht dargestellt, dass an einem, dem ersten gegenüberliegenden zweiten Ende der Eingangswelle, diese von dem Drehstab überragt wird. Der Drehstab ist dabei an seinem überragenden Ende drehfest mit einem Ritzel mittels einer Pressverbindung verbunden. Die Eingangswelle ist in etwa von der Mitte ab bis zum zweiten Ende von einem Gehäuse umgeben und darin in einem Eingangswellenlager gelagert.

Die Mittelstellungskappe 6 weist zur Aufnahme der Eingangswelle 1 eine Längsbohrung 7 auf, wobei unter anderem zum drehfesten Ineinandergreifen der beiden Bauteile auf der Innenwandung 8 der Längsbohrung 7 und der Außenseite 9 der Eingangswelle 1 teilweise ein Kerbzahnprofil ausgebildet ist. Im Montagezustand umgibt die Mittelstellungskappe 6 die Eingangswelle 1 im Wesentlichen bis auf einen umfangsseitigen Ausschnitt 10 von der Mitte bis zum ersten Ende 3'. Dabei weist die Mittelstellungskappe 6 einen erweiterten Innen- und Außendurchmesser am gehäusenahen Ende 11 zur Aufnahme des Gehäuses auf. Diese als Schutzkappe wirkende Erweiterung 12 umfasst eine Gehäuseöffnung eines Gehäuseendes mit Spiel, so dass die im Gehäuse liegende Eingangswelle und das Eingangswellenlager vor äußeren Einflüssen geschützt sind. Die Mittelstellungskappe 6 weist weiterhin einen sich axial von der Schutzkappe 12 bis über das erste Ende 3' der Eingangswelle hinaus erstreckenden dünnwandigen Fortsatz 13 auf. Der Fortsatz 13 ist so ausgestaltet, dass er in einem Teil eines Kreuzgelenks der Lenksäule verklemmt wird und somit als Positionierungshilfe der Lenksäule relativ zur Eingangswelle dient. Weiterhin ist am lenksäulennahen Ende der Mittelstellungskappe ein topfförmig ausgestalteter Fortsatz 14 vorgesehen, der in die Hohlbohrung des ersten Endbereichs 3 aufgenommen ist. Somit wird das erste Ende 3' der Eingangswelle 1 von der Mittelstellungskappe 6 abgedeckt und die Hohlbohrung 5 von dem topfförmigen Fortsatz 14 verschlossen. Vorzugsweise besitzt der topfförmige Fortsatz 14 einen Dichtbereich, der an der Innenwandung 15 der Eingangswelle anliegt. Es ist denkbar diesen Dichtbereich als Dichtlippen, als O-Ring oder als angespritztes Elastomer auf dem Fortsatz 14 der Mittelstellungskappe 6 auszubilden.

Im Bereich des Ausschnitts 10 der Mittelstellungskappe 6 ist dabei auf der Außenseite 9 der Eingangswelle 1 eine umlaufende Nut 16 in der Kerbverzahnung vorgesehen. Der Teil des Ausschnitts im Fortsatz 10' und die Nut 16 dienen zur Aufnahme einer Klemmschraube, durch die im Zusammenspiel mit einer Mutter der Teil des Kreuzgelenks der Lenksäule mit der Eingangswelle verklemmt wird. Dazu weist der nicht dargestellte Teil des Kreuzgelenks einen Längsschlitz auf, in den im montierten Zustand der dünnwandige Fortsatz 13 der Eingangswelle eingreift. Dieser Teil des Kreuzgelenks umgibt die Eingangswelle im Bereich des Ausschnitts und der Kerbverzahnung im Wesentlichen unmittelbar. Durch die Klemmverbindung werden das Teil des Kreuzgelenks und die Eingangswelle reibschlüssig verbunden. Das Zusammenspiel der Klemmschraube mit dem Ausschnitt 10' und der umlaufenden Nut 16 dient als weitere Sicherung der Verbindung.

Weiterhin ist an dem Umfangsmantel 17 der Schutzkappe 12 eine radial abstehende Nase 18 vorgesehen, die als Markierung dient. Bei der Montage muss diese Markierung mit einer zweiten Markierung, die am Lenkgetriebe vorgesehen ist, übereinstimmen. Dadurch ist gewährleistet, dass beim Eingreifen des Fortsatzes der Mittelstellungskappe in den Längsschlitz des Kreuzgelenks sich das Lenkrad in Mittelstellung für die Geradeausfahrt und damit in korrekter Zuordnung zum Lenkgetriebe befindet.

Die Mittelstellungskappe 6 mit Schutzkappe 12, topfförmigen Fortsatz 14, dünnwandigen Fortsatz 13 und Nase 18 ist als ein einstückiges Kunststoffteil ausgebildet, welches im Spritzgießverfahren hergestellt ist.

Durch den erfindungsgemäßen Eingangswellen-Drehstabverbund mit Mittelstellungskappe kann auf die herkömmlich vorgesehene O-Ring-Nut des Drehstabs verzichtet werden. Dadurch wird das Balancieren deutlich einfacher, der Drehstab kann um die Ringnut verkürzt werden, die Lebensdauer des Drehstabs wird erhöht und die Kosten für die Fertigung fallen deutlich geringer aus.

## Patentansprüche

1. Kraftfahrzeuglenkung mit einem Eingangswellen-Drehstabverbund aufweisend einen in einer axialen Hohlbohrung (5) einer Eingangswelle (1) angeordneten Drehstab (2), wobei der Drehstab in einem ersten Endbereich mit der Eingangswelle drehfest verbunden ist, und eine die Eingangswelle (1) zumindest teilweise umgebenden Mittelstellungskappe (6), die einen in Axialrichtung erstreckenden Fortsatz (13) aufweist, der zur Ausrichtung der Eingangswelle (1) relativ zu einer Lenksäule vorgesehen ist, **dadurch gekennzeichnet, dass** die Mittelstellungskappe (6) in die Hohlbohrung (5) der Eingangswelle (1) an einem lenksäulennahen Ende (3') eingreift.

2. Kraftfahrzeuglenkung nach Anspruch 1, **dadurch gekennzeichnet, dass** zwischen der Mittelstellungskappe (6) und einer Innenwandung (15) der Hohlbohrung (5) der Eingangswelle (1) ein Dichtbereich vorgesehen ist.

3. Kraftfahrzeuglenkung nach Anspruch 2, **dadurch gekennzeichnet, dass** der Dichtbereich wenigstens eine Dichtlippe aufweist.

4. Kraftfahrzeuglenkung nach einem der vorhergehenden Ansprüche, **dadurch gekennzeichnet, dass** die Mittelstellungskappe (6) einstückig in einem Spritzgussverfahren hergestellt ist.

5. Kraftfahrzeuglenkung nach einem der vorhergehenden Ansprüche, **dadurch gekennzeichnet, dass** die Mittelstellungskappe (6) einen topfförmigen Fortsatz (14) zur Aufnahme in die Hohlbohrung (5) der Eingangswelle (1) aufweist.

6. Kraftfahrzeuglenkung nach Anspruch 5, **dadurch gekennzeichnet, dass** der topfförmige Fortsatz (14) eine umlaufende Außennut zur Aufnahme eines O-Rings aufweist.

7. Kraftfahrzeuglenkung nach einem der vorhergehenden Ansprüche, **dadurch gekennzeichnet, dass** die Eingangswelle (1) den Drehstab (2) über den ersten Endbereich (3) überragt.

8. Kraftfahrzeuglenkung nach einem der vorhergehenden Ansprüche, **dadurch gekennzeichnet, dass** der Drehstab (2) in dem ersten Endbereich mit der Eingangswelle (1) drehfest verstiftet ist.

9. Kraftfahrzeuglenkung nach einem der vorhergehenden Ansprüche, **dadurch gekennzeichnet, dass** der Drehstab (2) in dem ersten Endbereich mit der Eingangswelle (1) drehfest verbunden ist

10. Kraftfahrzeuglenkung nach Anspruch 9, **dadurch gekennzeichnet, dass** der Drehstab (2) in dem ersten Endbereich mit der Eingangswelle (1) formschlüssig verbunden ist.

11. Kraftfahrzeuglenkung nach Anspruch 9, **dadurch gekennzeichnet, dass** der Drehstab (2) in dem ersten Endbereich mit der Eingangswelle (1) kraftschlüssig verbunden ist.

12. Kraftfahrzeuglenkung nach einem der vorhergehenden Ansprüche, **dadurch gekennzeichnet, dass** die Mittelstellungskappe (6) am lenksäulenfernen Ende in eine Schutzkappe (12) ausläuft, die eine darunterliegende Gehäuseöffnung eines die Eingangswelle umgebenden Gehäuses abdeckt.

13. Mittelstellungskappe (6) für eine Kraftfahrzeuglenkung nach einem der vorhergehenden Ansprüche.

## Claims

1. Motor vehicle steering system with an input shaft/torsion bar assembly having a torsion bar (2) which is arranged in an axial hollow bore (5) of an input shaft (1), the torsion bar being connected in a first end region fixedly to the input shaft so as to rotate with it, and having, furthermore, a centre position cap (6) which surrounds the input shaft (1) at least partially and has a projection (13) which extends in the axial direction and is provided for orienting the input shaft (1) relative to a steering column, **characterized in that** the centre position cap (6) engages into the hollow bore (5) of the input shaft (1) at an end (3') which is close to the steering column.

2. Motor vehicle steering system according to Claim 1, **characterized in that** a sealing region is provided between the centre position cap (6) and an inner wall (15) of the hollow bore (5) of the input shaft (1).

3. Motor vehicle steering system according to Claim 2, **characterized in that** the sealing region has at least one sealing lip.

4. Motor vehicle steering system according to one of the preceding claims, **characterized in that** the centre position cap (6) is produced in one piece in an injection moulding method.

5. Motor vehicle steering system according to one of the preceding claims, **characterized in that** the centre position cap (6) has a pot-shaped projection (14) for being received into the hollow bore (5) of the input shaft (1).

6. Motor vehicle steering system according to Claim 5, **characterized in that** the pot-shaped projection (14) has a circumferential outer groove for receiving an O-ring.

7. Motor vehicle steering system according to one of the preceding claims, **characterized in that** the input shaft (1) protrudes beyond the torsion bar (2) via the first end region (3).

8. Motor vehicle steering system according to one of the preceding claims, **characterized in that** the torsion bar (2) is pinned in the first end region fixedly to the input shaft (1) so as to rotate with it.

9. Motor vehicle steering system according to one of the preceding claims, **characterized in that** the torsion bar (2) is connected in the first end region fixedly to the input shaft (1) so as to rotate with it.

10. Motor vehicle steering system according to Claim 9, **characterized in that** the torsion bar (2) is connected in the first end region to the input shaft (1) in a positively locking manner.

11. Motor vehicle steering system according to Claim 9, **characterized in that** the torsion bar (2) is connected in the first end region to the input shaft (1) in a non-positive manner.

12. Motor vehicle steering system according to one of the preceding claims, **characterized in that** the centre position cap (6) tapers off at the end which is remote from the steering column into a protective cap (12) which covers a housing opening, which lies below it, of a housing which surrounds the input shaft.

13. Centre position cap (6) for a motor vehicle steering system according to one of the preceding claims.

## Revendications

1. Direction de véhicule automobile avec un ensemble arbre d'entrée-barre de torsion présentant une barre de torsion (2) disposée dans un alésage creux axial (5) d'un arbre d'entrée (1), dans lequel la barre de torsion est assemblée de façon calée en rotation à l'arbre d'entrée dans une première région d'extrémité, et un capot de centrage (6) entourant au moins partiellement l'arbre d'entrée (1), qui présente un prolongement (13) s'étendant en direction axiale, qui est prévu pour l'orientation de l'arbre d'entrée (1) par rapport à une colonne de direction, **caractérisée en ce que** le capot de centrage (6) s'engage dans l'alésage creux (5) de l'arbre d'entrée (1) à une extrémité (3') proche de la colonne de direction.

2. Direction de véhicule automobile selon la revendication 1, **caractérisée en ce qu'**il est prévu une région d'étanchéité entre le capot de centrage (6) et une paroi intérieure (15) de l'alésage creux (5) de l'arbre d'entrée (1).

3. Direction de véhicule automobile selon la revendication 2, **caractérisée en ce que** la région d'étanchéité présente au moins une lèvre d'étanchéité.

4. Direction de véhicule automobile selon l'une quelconque des revendications précédentes, **caractérisée en ce que** le capot de centrage (6) est fabriqué en une seule pièce par un procédé de moulage par injection.

5. Direction de véhicule automobile selon l'une quelconque des revendications précédentes, **caractérisée en ce que** le capot de centrage (6) présente un prolongement en forme de pot (14) à loger dans l'alésage creux (5) de l'arbre d'entrée (1).

6. Direction de véhicule automobile selon la revendication 5, **caractérisée en ce que** le prolongement en forme de pot (14) présente une rainure extérieure périphérique destinée à recevoir un joint torique.

7. Direction de véhicule automobile selon l'une quelconque des revendications précédentes, **caractérisée en ce que** l'arbre d'entrée (1) dépasse la barre de torsion (2) sur la première région d'extrémité (3).

8. Direction de véhicule automobile selon l'une quelconque des revendications précédentes, **caractérisée en ce que** la barre de torsion (2) est goupillée à l'arbre d'entrée (1) de façon calée en rotation dans la première région d'extrémité.

9. Direction de véhicule automobile selon l'une quelconque des revendications précédentes, **caractérisée en ce que** la barre de torsion (2) est assemblée de façon calée en rotation à l'arbre d'entrée (1) dans la première région d'extrémité.

10. Direction de véhicule automobile selon la revendication 9, **caractérisée en ce que** la barre de torsion (2) est assemblée par emboîtement à l'arbre d'entrée (1) dans la première région d'extrémité.

11. Direction de véhicule automobile selon la revendication 9, **caractérisée en ce que** la barre de torsion (2) est assemblée par serrage à l'arbre d'entrée (1) dans la première région d'extrémité.

12. Direction de véhicule automobile selon l'une quelconque des revendications précédentes, **caractérisée en ce que** le capot de centrage (6) se termine à l'extrémité éloignée de la colonne de direction par un capot de protection (12), qui recouvre une ouverture de boîtier sous-jacente d'un boîtier entourant l'arbre d'entrée.

13. Capot de centrage (6) pour une direction de véhicule automobile selon l'une quelconque des revendications précédentes.
